# EUROPEAN PATENT APPLICATION

(11) **EP 2 705 743 A1**
(43) Date of publication of application: **12.03.2014**
(21) Application number: 12075100.3
(22) Date of filing: 07.09.2012
(51) Int. Cl.: A01D 46/26

(54) **Shaking device for harvesting small fruits**

(71) Applicant: Fuego Invest & Finance Corp., Road Town, Tortola (VG)
(72) Inventor: Balestreri, Rita Emilia, 6944 Cureglia (CH)
(74) Representative: Zardi, Marco

(57) **Abstract**

A shaking device (100) for harvesting small fruit comprising: a holding rod (101) ; at least one support body (105) movably connected to the holding rod; a plurality of sticks (110) having an end connected to the support body. A means for causing an alternated movement to the support body with respect to the holding rod is provided, the alternated movement causing a corresponding integral alternated movement to the sticks (110), and the alternated movement having a predetermined frequency. The sticks (110) are made of a flexible material having a predetermined first natural resonant frequency and the means for causing an alternated movement is configured to cause the alternated movement to have a frequency set between 80% and 95% of the first natural resonant frequency of the flexible sticks (110) so that it will cause an amplification of said movement. The sticks (110,) are made of a flexible material having a predetermined elasticity modulus and have a cross section with a predetermined moment of inertia such that if they are moved with an alternated movement set preferably between 1000 and 1600 cycles per minute, they vibrate with a frequency that is set between 80% and 95% of the first natural resonant frequency.

## Description

### Field of the invention

The present invention relates to a device for harvesting small fruit, for example olives, coffee, etc. which shake the branches of plants that hold the fruit, up to cause it to fall.

### Background of the invention

Devices are known which shake the branches of plants for harvesting small fruit, as disclosed for example in EP2374345.

Another shaking device of this type, as described in EP0427170A1, provides a hydraulic circuit that operates a plurality of rocking parts with flexible sticks to transmit them an oscillatory movement, in such a way that when they are put among the branches they cause the small fruit to fall down. The flexibility of the sticks and the oscillation of the parts from which the sticks extend cause the flexible sticks to assume a wavy shape, which assists the fruit to fall.

EP0427170A1 has the drawback that natural resonant frequencies higher than the second order are reached in order to obtain the wavy shape of the sticks. This leads to high kinetic energy values that can damage and break the thinner branches of the tree and damage the fruit.

Furthermore, to reach the natural resonant frequencies higher than the second order the first and second natural resonant frequencies of the sticks have to be passed, and for this reason the sticks themselves can break or be damaged.

### Summary of the invention

It is therefore a feature of the present invention to provide a shaking device for harvesting small fruit that optimizes the exploitation of the stick elasticity with respect to the prior art.

It is another feature of the present invention to provide a device for harvesting small fruit that prevents the sticks to be broken or damaged.

It is another feature of the present invention to provide a device for harvesting small fruit that does not damage the plants from which the small fruit has to be harvested.

It is another feature of the present invention to provide a device for harvesting small fruit that increases the mechanical efficiency of the full ensemble.

These and other objects are achieved by a shaking device for harvesting small fruit, comprising:
- a holding rod;
- a plurality of sticks having an end connected to a support body;
- at least one support body movably connected to the holding rod according to the prior art or, innovatively, one support body not movably but rigidly connected to the holding rod and a moving mean linked to the sticks near its fix base end;
- a means for causing an alternated movement, the alternated movement causing a corresponding alternated movement to the sticks, and the alternated movement having a predetermined frequency;
   wherein the sticks are made of a flexible material having a predetermined first natural resonant frequency;
   and wherein the means for causing an alternated movement is configured to cause the alternated movement to have a frequency set between 75% and 98% of the first natural resonant frequency of the flexible sticks.

This way, the resilient flexural component amplifies the mechanical movement that is imposed to the sticks. Similarly, the frequency range reduces the kinetic energy transferred to the plants, preventing them to be damaged. For the same reason, energy consumption is reduced, therefore, using for example an electric motor, battery autonomy is increased.

For example, the alternated movement is provided at a frequency set between 75% and 85% the first natural resonant frequency of the flexible sticks.

Preferably, the frequency of the alternated movement is set between 85% and 98% of the first natural resonant frequency of the flexible sticks.

In a preferred exemplary embodiment of the invention, the sticks are made of a flexible material having a predetermined elasticity modulus, and have a cross section with a predetermined moment of inertia such that if they are moved with an alternated movement set between 1000 and 1600 cycles per minute they vibrate with a frequency that is set between 75% and 98% of said first natural resonant frequency.

This way, it is possible to adjust the amplitude of the oscillations at the free ends of the sticks, by suitably adjusting the actuation means frequency.

In a possible exemplary embodiment, the sticks can have a circular cross section.

As an alternative, the sticks have a substantially rectangular cross section with thinner thickness in the oscillation plane and thickness higher in a plane orthogonal to oscillation plane. This solution limits a possible oscillation of the sticks in a plane orthogonal to oscillation plane.

Preferably the sticks may be made of a material selected from the group consisting of: glass fibres, carbon fibres, steel, polymeric material.

In an alternative exemplary embodiment, the sticks comprise a core of a material that has a higher elasticity modulus and at least one lining layer arranged about the core, the lining layer made of a material that has a lower elasticity modulus, or conversely.

Alternatively, the sticks have a variable cross section, wherein preferably the cross section is larger at the root of the stick and is smaller at the tip of the stick.

In an exemplary embodiment of the invention, the sticks have a hollow cross section.

Advantageously, the support comprises a means for transmitting a circular oscillation to the sticks, in particular the circular oscillation is a conical movement, and wherein preferably the sticks have a substantially rectangular cross section.

In an exemplary embodiment of the invention, the support body is pivotally constrained to the support rod and oscillates about an axis.

In another exemplary embodiment, the support body is translationally constrained to the support rod.

Advantageously, the actuation means exploits a continuous rotation transmitted by a motor to the device.

In particular, the actuation means is of electric type.

As an alternative, the actuation means is of pneumatic or hydraulic type.

### Brief description of the drawings

Further characteristic and/or advantages of the shaking device for harvesting small fruit according to the present invention will be made clearer with the following description of an exemplary embodiment thereof, exemplifying but not limiting, with reference to the attached drawings in which:
- Fig. 1 shows a diagrammatic perspective view of a shaking device for harvesting small fruit according to an embodiment of the invention, provided with two adjacent translationally movable supports for flexible shaking sticks;
- Fig. 2 shows a diagrammatic perspective view of a shaking device for harvesting small fruit according to another embodiment of the invention, provided with two parallel, translationally movable, supports for flexible shaking sticks;
- Fig. 3 shows a diagrammatic perspective view of a shaking device for harvesting small fruit according to a further embodiment of the invention, provided with a rotationally movable support for flexible shaking sticks;
- Fig. 4 shows a diagrammatic perspective view of a shaking device for harvesting small fruit according to still another further embodiment of the invention, provided with rotationally movable support for flexible shaking sticks;
- Fig. 5 show a top plan view of the device of Fig. 4;
- Fig. 6 and 7 show a diagrammatical front view and a diagrammatical perspective view, showing possible constructions of the sticks;
- Fig. 8 is a front view of a shaking device according to an embodiment of the invention similar to that of figure 1, showing the deformation of the sticks vibrating at a frequency proximate to the first natural frequency thereof;
- Fig. 9 is a front view of a shaking device according to another embodiment of the invention similar to that of figure 2, showing the translational movement of the sticks and the deformation of the sticks vibrating at a frequency proximate to the first natural frequency thereof;
- Fig. 10 is a front view of a shaking device according to a further embodiment of the invention showing the rotational movement of the supports of the sticks and the deformation of the sticks vibrating at a frequency proximate to the first natural frequency thereof;
- Fig. 11 is a front view of a shaking device according to still another embodiment of the invention showing the rotational movement of the supports of the sticks showing the deformation of the sticks vibrating at a frequency proximate to the first natural frequency thereof;
- Fig. 12 is a front view of a shaking device according to still a further embodiment of the invention showing the rotational movement of the supports of the sticks showing the deformation of the sticks vibrating at a frequency proximate to the first natural frequency thereof;
- Fig. 13 is a perspective view of a shaking device according to an embodiment of the invention similar to that of figure 3 and showing the rotational movement of the sticks according to a conical motion, showing the deformation of the sticks vibrating at a frequency proximate to the first natural frequency thereof;
- Fig. 14 and 15 are a perspective view and a top plan view, respectively of a shaking device according to another embodiment of the invention similar to that of figure 4 and 5 showing the rotational movement of the sticks support;
- Fig. 16 show schematically the movement of a stick, showing the deformation of the flexible stick vibrating at a frequency proximate to the first natural frequency thereof, and the difference of its oscillation amplitude with respect to a stiff vibrating stick, i.e. a stick vibrating at a frequency much lower than the first natural frequency thereof;
- Fig. 17 is a diagrammatic perspective view of a shaking device according to still a further embodiment of the invention showing, innovatively, the support 805 of the sticks rigidly connected to the holding rod 801 and the sticks are linked to the moving mean by a pivotally connection 815 placed near, i.e. 1/4 of their length, to their base end. The figure shows the deformation of the sticks vibrating at a frequency proximate to the first natural frequency thereof.
- Fig. 18 is a diagrammatic perspective view of a shaking device according to still a further embodiment of the invention showing a further innovative embodiment in which the lower ends of the rods are not connected rigidly to the support 805 but rather pivotally and the sticks are linked to the moving mean by a pivotally connection 815 placed near, i.e. 1/4 of their length, to their base end. The figure shows the deformation of the sticks vibrating at a frequency proximate to the first natural frequency thereof.
- Fig. 19 is a diagrammatic perspective view of a shaking device according to still a further embodiment of the invention showing a further innovative embodiment in which, inversely to fig. 18, the lower ends of the rods are pivotally linked to the moving mean by the pivotally connection 815 while the pivotally connection 816 placed i.e. 1/4 of their length is locked, being connected with the holding rod 801.
- Fig. 20 shows a shaking device comprising an actuation means arranged to be actuated by an available drive shaft co-axial to the holding rod of the device;
- Figures 21 and 22 show two shaking devices comprising an electric and pneumatic or hydraulic actuation means, respectively.

### Description of preferred exemplary embodiments

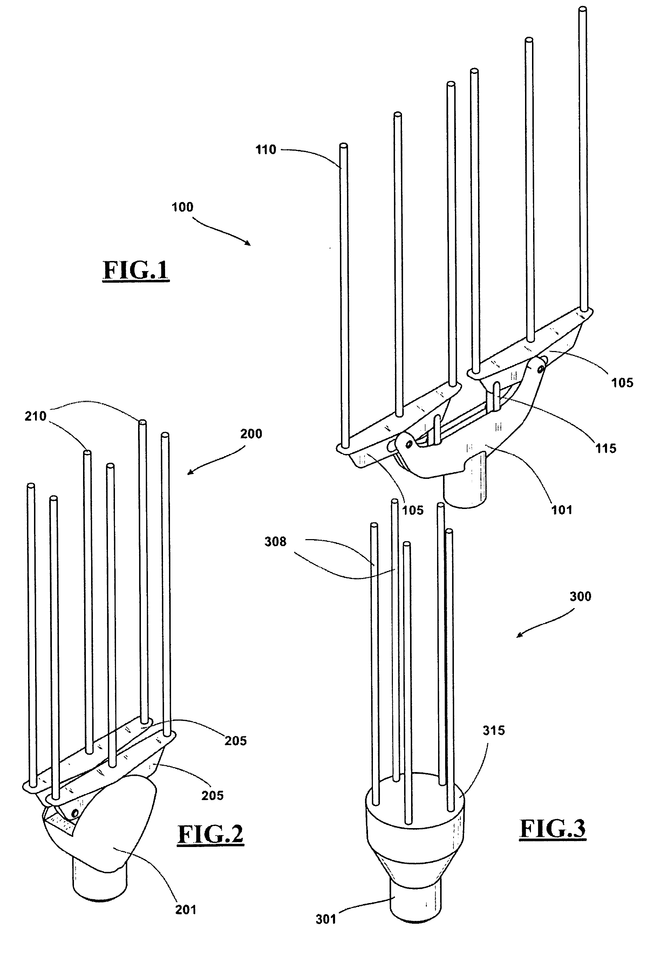

In all the embodiments of figures 1-22 of the invention, described below, of a device for harvesting small fruit, the sticks are connected to a support body or linked to the moving mean which is operated by an actuating system with an alternated movement set preferably between 1000 and 1600 cycles per minute. So the sticks, moving at such frequency proximate to their first natural frequency, will amplify their oscillation amplitude. This shaking frequency and the stick flexibility is optimal for causing small fruit, such as olives, coffee, etc, to fall from the plants without causing break of the branches, fall of leaves or damage to the fruit.

The term "flexible", in the present description, has to be intended as clarified below.

According to the invention the flexible sticks are built in order to have a first natural vibration frequency much lower than the flexible sticks of prior art. In particular, their first natural vibration frequency is selected in order to be not much higher than the normal shaking frequency of the existing shaking devices, which is set between 1000 and 1600 cycles per minute.

In other words, the flexible sticks are made of a flexible material having a predetermined elasticity modulus and have a cross section with a predetermined moment of inertia such that when they are subject to such an alternated movement set preferably between 1000 and 1600 cycles per minute they vibrate with a frequency that is set between 75% and 98% of said first natural resonant frequency.

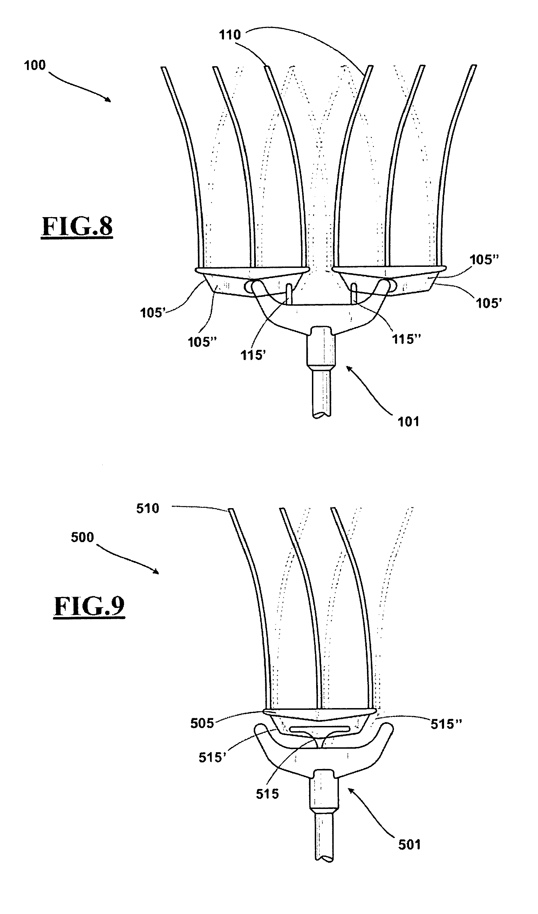

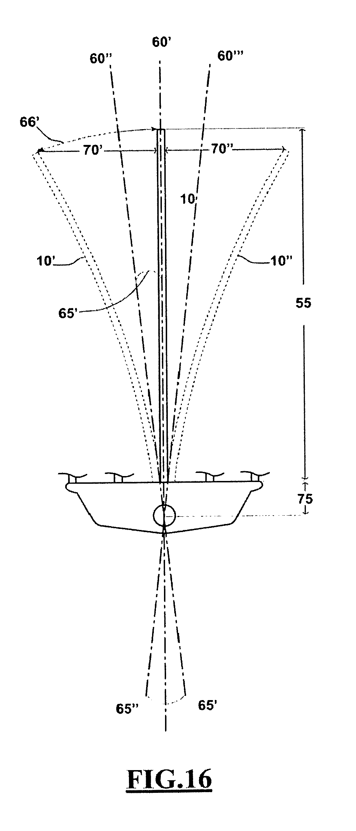

Therefore, the rigid vibration amplitude of the support body or moving mean turns into an amplified oscillation as shown in figures 8-13 and 16-19, and is increased up to 2-3 times or more with respect to the rigid oscillation, as shown in figure 16, without reaching dangerous energy levels that could cause the undesired effects of breaking the branches, damaging the fruit, detaching the leaves, and even damaging the flexible sticks.

A relevant energy saving is also obtained. In fact, for reaching predetermined shaking amplitude of the flexible sticks, 2-3 times less of energy is required than in prior art shaking devices which use substantially stiff sticks. For example, if a desired excursion of a tip of a flexible stick is 6 cm for achieving an optimal harvesting effect, according to the invention the support has to oscillate with an excursion which would correspond to a movement of only 2 cm. The further 4 cm excursion are provided by the amplification of the flexible stick when they vibrates at a frequency that is between 75% and 98% of the first natural resonant frequency.

Some possible exemplary embodiments are now described in detail.

With reference to Fig. 1, a first exemplary embodiment of a shaking device 100 for harvesting small fruit provides two support bodies 105 aligned with respect to each other, which are movably connected to a holding rod via a fixed intermediate support 101. Shaking device 100 also comprises a plurality of flexible sticks 110 each having one end connected to one of two support bodies 105 and each having a natural resonant frequency as described above.

Fig. 2 shows a diagrammatic perspective view of a shaking device 200 according to another exemplary embodiment of the invention. Shaking device 200 comprises a holding rod, two parallel support bodies 205 that are movably connected to holding rod via a fixed intermediate support 201 in order to oscillate in opposed direction in two planes parallel to each other. Shaking device 200 also comprises a plurality of flexible sticks 210 each having one end connected to support body 205 and each having a natural resonant frequency as described above.

Fig. 3 shows a diagrammatic perspective view of a shaking device 300 according to a further exemplary embodiment of the invention. Shaking device 300 comprises a holding rod 301 and one support body 315 that is movably connected to the holding rod. The support body can oscillate with a conical movement. Shaking device 300 also comprises a plurality of flexible sticks 308 each having one end connected to support body 315 and each having a natural resonant frequency as described above.

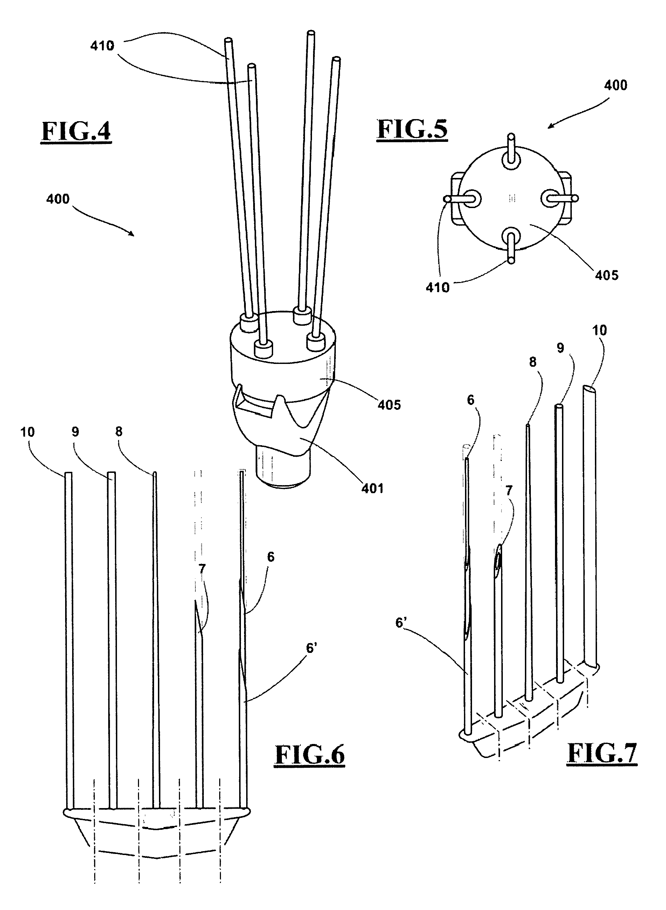

Figs. 4 and 5 show a diagrammatic perspective view, and a top plan view of a shaking device 400 according to still another exemplary embodiment of the invention. The support body 405 can oscillate with a rotational movement. Shaking device 400 comprises a holding rod and a plurality of flexible sticks 410 each having one end connected to the support body 405.

Each flexible stick 110,210,308,410 of figures 1-4 has a first natural resonant frequency in the flexural oscillation mode allowed by the above constraint to support body 105, 205, 305, 405. An alternated movement of a predetermined frequency of support bodies 105,205,305,405 can be caused by an actuation means 101,201,301,401 comprising an actuation element and a prime motor, not shown, which actuates the respective actuation means 101,201,301,401. The alternated movement of support bodies 105, 205, 305, 405 causes a corresponding integral alternated movement of flexible sticks 110,210,308,410, and causes the flexible sticks to vibrate amplifying the oscillation as discussed above.

In both devices 100,200 of Figs 1,2, actuation means 101, 201 is arranged to cause a translational movement of flexible sticks 110,210. In other words, each flexible stick 110,210 can move along respective ideal planes substantially defined by the flexible stick itself when at rest and by a predetermined linear oscillation direction.

In both devices 300,400, the actuation means is arranged to cause a rotational movement of flexible sticks 308,410. In other words, each flexible stick 308,410 can move respectively about an axis defined substantially by the support 405 axis, and abut a predetermined oscillation rotational direction according to a conical movement. As said above, according to the invention, the means for causing an alternated movement is configured such that the above alternated movement has a frequency that is set between 75% and 98% of the first natural resonant frequency of flexible sticks 110,210,308,410.

Possible ranges of frequency for the oscillation movement of support bodies 105,205,315,415 and of flexible sticks 110,210,308,410 are 75% to 85% and preferably 85% to 98% of first natural resonant frequency of flexible sticks 110,205,315,415, regardless the oscillation movement is a translational movement, like in shaking devices 100 and 200 (Figs. 1 and 2), or a rotational/conical movement, like in shaking devices 300,400 (Fig. 3 and 4).

A further optional specification for the oscillation frequency is preferably 1000 to 1600 cycles per minute, which can be established by properly choosing the elasticity modulus of the material with which flexible sticks 110,210,308,410 are made, along with the geometric features of flexible sticks themselves, e.g. the shape and the size of their cross section, to obtain a suitable moment of inertia.

Flexible sticks 110,210,308,410 may be made of any suitable, flexible material, such as a metal like steel, a polymeric material, carbon fibres, or even a glass fibres material. Preferably, the material of flexible sticks 110,210,308,410 is a resilient high-tightness material.

In an embodiment, as shown in Figs. 6 and 7, two different materials are used to make flexible sticks 110, 210,308,410 which comprise a core portion 6 and a lining layer 6' formed about core portion 6, wherein the core portion 6 is made of a core material that has an elasticity modulus preferably higher than the elasticity modulus of the lining material of which lining layer 6' is made.

The shape of the cross section of flexible sticks 110,210,308,410 may be for instance circular o square, i.e. a shape that is symmetrical about a central axis, or even a substantially rectangular shape 10, in which the oscillation plane cuts the cross section parallel to the shortest side.

Still with reference to Figs. 6 and 7, in a possible embodiment of the invention, flexible sticks 8 can have a cross section that changes along the longitudinal direction of the flexible sticks, in particular the cross section can preferably be larger at the point where flexible stick 8 is connected with support body, and be smaller at the opposite portion, or tip portion.

In another embodiment, the flexible sticks 7 can have a hollow cross section.

Figs. 8 and 9 show shaking devices 100 and 500 according to respective exemplary embodiments of the invention in which the support bodies 101 and the support body 501, respectively, comprises a means for transmitting, by means of the respective support rod, a translational movement to flexible sticks 110 and 510.

More in detail, the flexible sticks are shown in extreme respective positions of the translational movement. To this purpose, as shown for example in Fig. 9, support body of the sticks 505 is integral to an actuation element 515, that has a lower portion slidingly arranged within the rod. Actuation element 515 is longitudinally actuated according to an alternated movement between a contracted position 515' and an extended position 515".

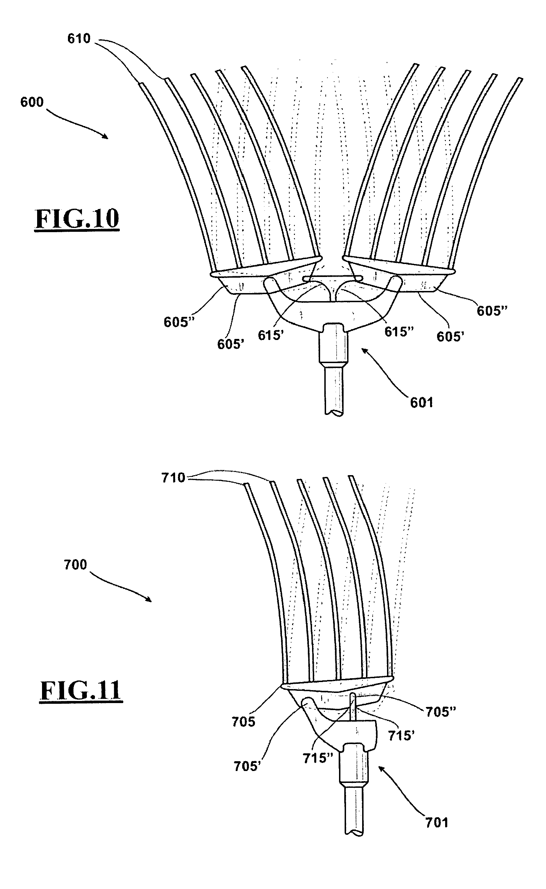

Figs. 10 and 11 show shaking devices 600 and 700 according to respective exemplary embodiments of the invention in which the support bodies 601 and the support body 701, respectively, comprise/s a means for transmitting a circular movement to flexible sticks 610 and 710. More in detail, the flexible sticks are shown in extreme respective position. To this purpose, as shown for example in Fig. 11, support rod 701 is pivotally constrained to the support body of the sticks 705 at one own portion end 705', while the opposite end 705", or a portion intermediate between end portion 705',705" of support body of the sticks 705 is arranged to be moved by a piston 715'-715" slidingly arranged within the rod. Piston 715'-715" is longitudinally actuated according to an alternated movement between a contracted position 715' and an extended position 715".

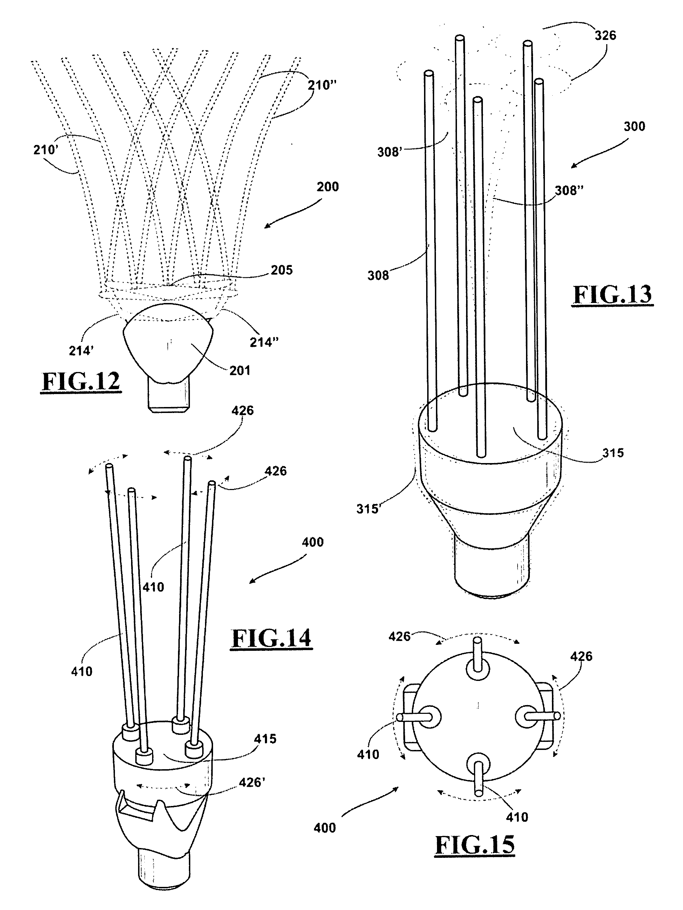

Fig. 12 shows a shaking device 200 wherein flexible sticks 210 are shown in extreme respective position 210',210" of their own rotational movement. To this purpose, support body 201 is integral to an actuation element adapted to rotationally actuate supports of the sticks 205 about the own axis. Actuation element is rotationally actuated according to an alternated oscillatory movement between two extreme portions 214',214". In shaking device 200, each flexible stick 210 can oscillate substantially along a plane orthogonal to the rotation axis of the supports of the sticks 205.

Figs. 13 to 15 show two shaking devices according to respective embodiments of the invention, in which the actuation means of the flexible sticks is arranged to cause a rotational oscillation of the flexible sticks.

In particular, Fig. 13 shows shaking device 300 similar to that of Fig. 3, with flexible sticks 308. The movement of top end portion of each flexible stick 308 is shown as a dotted circle 326. Two radially opposite positions of one flexible stick 308 are also shown in dotted lines 308',308". In other words, the actuation means of device 300 exploits a continuous eccentric oscillation 315' transmitted by a motor to the support of the sticks 315.

Figs. 14 and 15 show shaking device 400 of Figs. 4 and 5. The rotational movement of top end portion of each flexible stick 410 is shown as an arc of circle 426, as well as the circular oscillation 426' of corresponding support bodies 415. The support body 415 is caused to oscillate by a respective actuation member of an actuation means, not shown. Flexible sticks 410 are mounted at an angle with respect to the longitudinal axis of the rod, which cooperates with the flexibility of the flexible sticks 410 to amplify the rotational oscillation.

Fig. 16 compares the alternated movement of a hypothetical perfectly stiff stick of axis 60' with a flexible stick 10'-10". During the movement, both of them would rotate integrally with support from 65' to 65", but the former would alternately pass from position 60" to position 60"' and vice-versa, whereas the latter, due to its flexibility, would alternately pass from position 10' to position 10" and vice-versa. Therefore, the flexibility provided by the invention makes it possible to enhance the overall movement of the flexible stick to a distance 70',70" from the axis of the flexible stick when at rest. The length of a flexible stick is indicated by 55, while the distance between the base of the flexible stick and the rotation axis of the support body is indicated by 75.

In particular, the angle 66' formed by the tip of a flexible stick 10'-10" with respect to the axis when at rest is about three times corresponding angle 65' formed by a stiff stick, when the means for causing an alternated movement is configured to cause the alternated movement to have a frequency set between 75% and 98% of the first natural resonant frequency of the flexible sticks.

Concerning the actuation means, for determining the alternated movement of support body, it works like in a shaking device of prior art, but with a shorter oscillation amplitude. In fact, the more flexible nature of the sticks causes an amplification of oscillation, and the basic oscillation amplitude of the support body has to be much lower than the shaking devices of prior art.

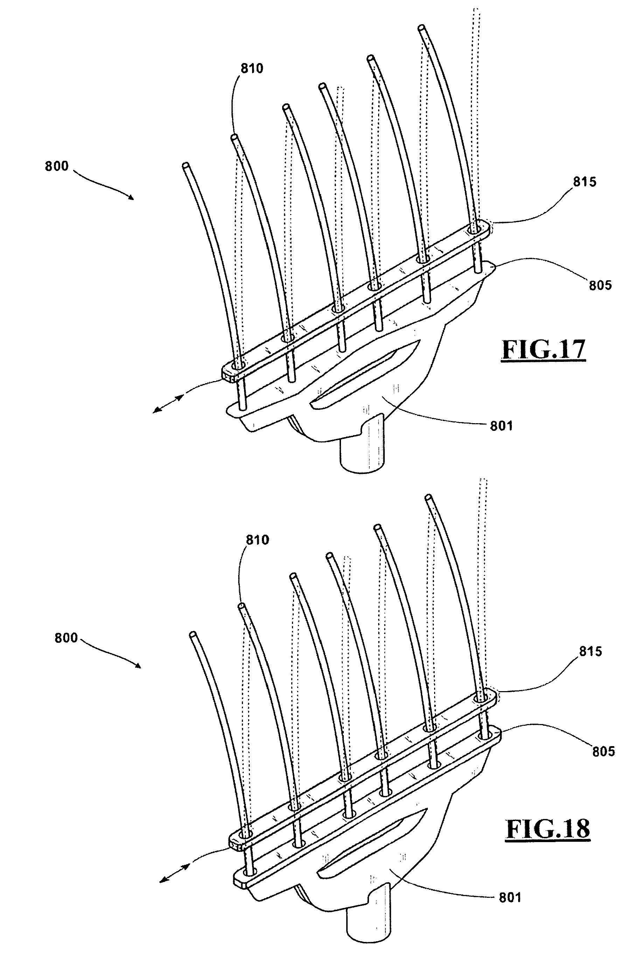

- Fig. 17 is a diagrammatic perspective view of a shaking device according to still a further embodiment of the invention showing an innovative movement in which the support 805 of the sticks is rigidly connected to the holding rod 801 and the sticks are linked to the moving mean by a pivotally connection 815 placed near, i.e. 1/4 of their length, to their base end. The figure shows the deformation of the sticks vibrating at a frequency proximate to the first natural frequency thereof.
- Fig. 18 is a diagrammatic perspective view of a shaking device according to still a further embodiment of the invention showing an innovative movement in which the lower ends of the rods are not connected rigidly to the support 805 but rather pivotally and the sticks are linked to the moving mean by a pivotally connection 815 placed near, i.e. 1/4 of their length, to their base end. The figure shows the deformation of the sticks vibrating at a frequency proximate to the first natural frequency thereof.

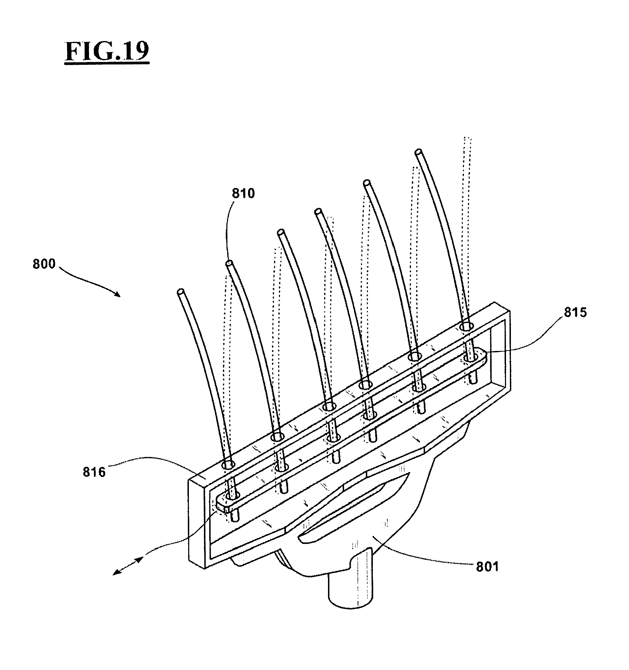

- Fig. 19 is a diagrammatic perspective view of a shaking device according to still a further embodiment of the invention showing an innovative movement in which, inversely to fig. 18, the lower ends of the rods are pivotally linked to the moving mean by the pivotally connection 815 while the pivotally connection 816, placed i.e. 1/4 of its length, is locked, being connected with the holding rod 801.

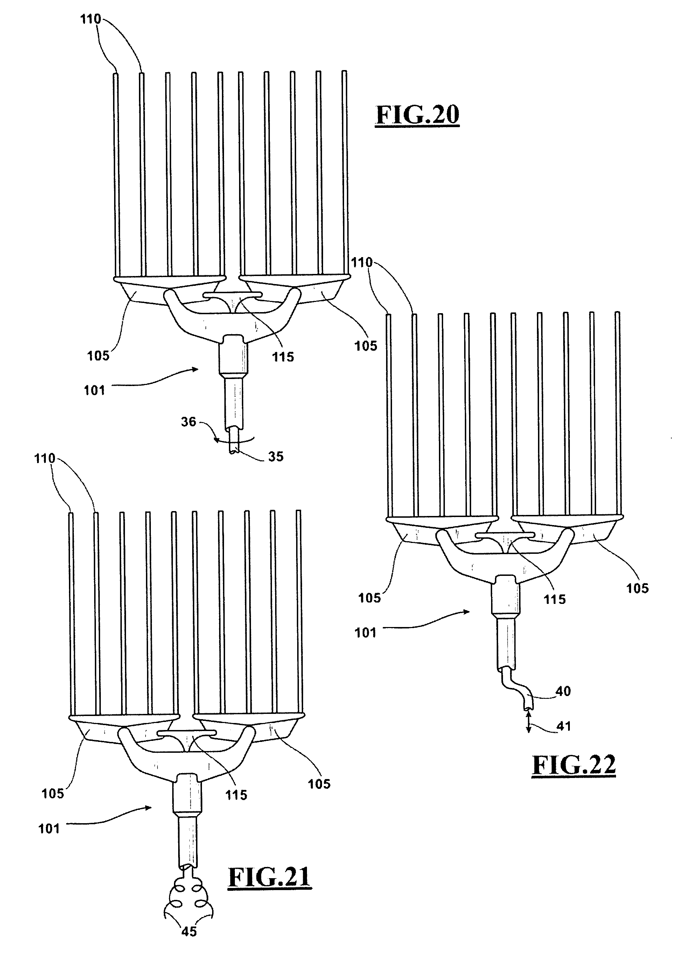

- In figures 20-22, possible different actuating embodiments are shown.
   Fig 20 shows shaking device 100 of Fig. 1, in which the actuation means is in turn actuated by the rotation of a drive shaft 35 co-axial to the holding rod.
   Fig 21 shows shaking device 100 of Fig. 1, in which an electric actuation means 101 is provided with an electric connection means 45, in particular a couple of wires or of terminals.
   Fig 22 shows shaking device 100 of Fig. 1, in which actuation means 101 is provided with a hydraulic or pneumatic connection means 40, in particular a conduit adapted to receive an actuation fluid 41 which may be a gas or a liquid such as actuation oil.

The foregoing description of specific exemplary embodiments of the device according to the invention, of a shaking device will so fully reveal the invention according to the conceptual point of view so that other, using the prior art, will be able to modify and/or to adapt for various applications these specific exemplary embodiments without further researches and without parting from the inventive concept, and it is therefore to be understood that such adaptation and changes will have to be considered as equivalent of the specific exemplary embodiments. The means and the material to provide the various functions described herein could have a different nature without, for this reason, departing from the scope of the invention. It is to be understood that the expressions or the terminology that is employed herein is for the purpose of description and not of limitation.

## Claims

1. A shaking device (100,200,300,400) for harvesting small fruit comprising:
- a holding rod (101,201,301,401);
- at least one support body (105,205,305,405) movably connected to said holding rod;
- a plurality of sticks (110,210,308,410,810) having an end connected to said support body;
- a means for causing an alternated movement of said sticks support body with respect to said holding rod or, innovatively, said support body of the sticks not movably but rigidly connected to the holding rod and a moving mean linked to the sticks near to, i.e. 1/4 of their length, sticks base end, said alternated movements causing a corresponding alternated movement of said sticks (110,210,308,410,810), and said alternated movement having a predetermined frequency; **characterised in that** said sticks (110,210,308,410,810) are made of a flexible high resilience material so that, working near their first natural resonant frequency, they can amplify, even several times, the amplitude of the oscillation received from the said actuation means that moves them.

2. A shaking device (100,200,300,400,800) for harvesting small fruit according to claim 1, wherein said frequency of said alternated movement is set between 75% and 98% of said first natural resonant frequency of said flexible sticks (110,210,308,410,810)

3. A shaking device (100,200,300,400,800) for harvesting small fruit according to claim 1, wherein said frequency of said alternated movement is set between 75% and 85% of said first natural resonant frequency of said flexible sticks (110,210,308,410,810)

4. A shaking device (100,200,300,400,800) for harvesting small fruit according to claim 1, wherein said frequency of said alternated movement is set between 85% and 98% of said first natural resonant frequency of said flexible sticks (110,210,308,410,810).

5. A shaking device (100,200,300,400,800) for harvesting small fruit according to one or more of the preceding claims, wherein, by simply adjusting the actuation means frequency, it is possible to adjust the amplitude of the oscillations at the free ends of the sticks and consequently to vary the power of the shaking device.

6. A shaking device (100,200,300,400,800) for harvesting small fruit according to one or more of the preceding claims, wherein said sticks (110,210,308,410,810) are made of a flexible material having a predetermined elasticity modulus and have a cross section with a predetermined moment of inertia such that if they are moved with an alternated movement set preferably between 1000 and 1600 cycles per minute they vibrate with a frequency that is set between 75% and 98% of said first natural resonant frequency.

7. A shaking device (100,200,300,400,800) for harvesting small fruit according to one or more of the preceding claims, wherein said sticks (110,210,308,410,810) have a circular cross section.

8. A shaking device (100,200,300,400,800) for harvesting small fruit according to one or more of the preceding claims, wherein said sticks (110,210,308,410,810) have a substantially rectangular cross section with thickness lower in the oscillation plane of the support and thickness higher in the plane orthogonal to the oscillation plane of the support.

9. A shaking device (100,200,300,400,800) for harvesting small fruit according to one or more of the preceding claims, wherein said sticks (110,210,308,410,810) are made of a material selected from the group consisting of: glass fibres, carbon fibers, steel, a polymeric material, a resilient high-tightness material.

10. **A** shaking device (100,200,300,400,800) for harvesting small fruit according to one or more of the preceding claims, wherein said sticks (110,210,308,410,810) comprise a core made using a different material by the material used to make one or more external lining layer arranged about said core. Preferably the inner material has a higher elasticity modulus with respect to the external material.

11. A shaking device (100,200,300,400,800) for harvesting small fruit according to one or more of the preceding claims, wherein said sticks (110,210,308,410,810) have a variable cross section, wherein said cross section is preferably larger at said root of said stick (110,210,308,410,810) and is smaller at said tip of said stick.

12. A shaking device (100,200,300,400,800) for harvesting small fruit according to one or more of the preceding claims, wherein said sticks (110,210,308,410,810) have a hollow cross section.

13. A shaking device (300,400) for harvesting small fruit according to one or more of the preceding claims, wherein said support body comprises a means for transmitting a circular or conical oscillation to said sticks (308, 410).

14. A shaking device (600, 700) for harvesting small fruit according to one or more of the preceding claims, wherein said support body is pivotally constrained to said support rod and rotates about an axis.

15. A shaking device (100, 500) for harvesting small fruit according to one or more of the preceding claims, wherein said support body is translationally constrained to said support rod.

16. A shaking device (800) for harvesting small fruit according to one or more of the preceding claims, wherein, innovatively, the support 805 of the sticks is rigidly connected to the holding rod 801 and the sticks are linked to the moving mean by a pivotally connection 815 placed near, i.e. 1/4 of their length, to their base end.

17. A shaking device (800) for harvesting small fruit according to one or more of the preceding claims, wherein, innovatively, the lower ends of the rods are not connected rigidly to the support 805 but rather pivotally and the sticks are linked to the moving mean by a pivotally connection 815 placed near, i.e. 1/4 of their length, to their base end.

18. A shaking device (800) for harvesting small fruit according to one or more of the preceding claims, wherein, innovatively, inversely to explained at claim 16, the lower ends of the rods are pivotally linked to the moving mean by the pivotally connection 815 while the pivotally connection 816, placed i.e. 1/4 of its length, is locked, being connected with the holding rod 801.

19. A shaking device for harvesting small fruit according to one or more of the preceding claims, wherein said actuation means exploits a continuous rotation transmitted by a motor to the device.

20. A shaking device for harvesting small fruit according to one or more of the preceding claims, wherein said actuation means is selected from the group consisting of: electric type; pneumatic type; hydraulic type.
